# EUROPÄISCHE PATENTSCHRIFT

(11) **EP 1 738 983 B1**
(45) Veröffentlichungstag und Bekanntmachung des Hinweises auf die Patenterteilung: **06.10.2010**
(21) Anmeldenummer: 06121028.2
(22) Anmeldetag: 09.07.2003
(51) Int. Cl.: B60T 8/40, B60T 8/44

(54) **By-Wire-Bremsbetätigungsvorrichtung**
Brake-by-Wire actuation device
Dispositif d'actionnement de frein à commande électrique

(30) Priorität: 09.07.2002 DE 10230865; 23.05.2003 DE 10323825; 28.05.2003 DE 10324503
(43) Veröffentlichungstag der Anmeldung: 03.01.2007
(62) Teilanmeldung aus: 03762667.8
(73) Patentinhaber: Continental Teves AG & Co. oHG, 60488 Frankfurt am Main (DE)
(72) Erfinder: Von Hayn, Holger, 61118 Bad Vilbel (DE); Schonlau, Jürgen, 65396 Walluf (DE); Rüffer, Manfred, 65843 Sulzbach (DE); Ritter, Wolfgang, 61440 Oberursel (DE); Klimes, Milan, 55270 Zornheim (DE); Queisser, Torsten, 60489 Frankfurt/M (DE); Eckert, Alfred, 55129 Mainz-Hechtheim (DE); Albrich von Albrichsfeld, Christian, 64283 Darmstadt (DE)

(56) Entgegenhaltungen:
- EP-A- 0 754 607
- WO-A-99/10215
- DE-A- 2 327 508
- DE-A- 4 029 793
- DE-A- 19 632 035
- DE-A- 19 750 977
- DE-A1- 4 239 386
- DE-C- 4 234 041
- DE-C- 19 543 698
- JP-A- 11 115 703
- US-A- 4 395 883
- US-A- 5 927 827
- PATENT ABSTRACTS OF JAPAN Bd. 2000, Nr. 13, 5. Februar 2001 (2001-02-05) -& JP 2000 280872 A (TOKICO LTD), 10. Oktober 2000 (2000-10-10)

## Beschreibung

Die Erfindung betrifft eine By-Wire-Bremsbetätigungsvorrichtung zur Betätigung einer regenerativen Kraftfahrzeugbremsanlage gemäß dem Oberbegriff des Patentanspruchs 1.

Eine By-wire-Bremsbetätigungsvorrichtung wurde bereits im Rahmen einer elektrohydraulischen Bremsanlage (EHB) vorgeschlagen. Die Vorrichtung beruht auf einer hydraulischen Entkopplung des Bremspedals von den hydraulischen Rückwirkungskräften des Bremssystems, indem elektromagnetische Trennventile vorgesehen sind, welche einen Hauptbremszylinder hydraulisch von dem Bremssystem abtrennen. Der Bremsdruck in den Radbremsen wird auf elektronischem Wege (by-wire) geregelt, indem das Signal des Betätigungssensors, welcher beispielsweise als Pedalwegsensor ausgelegt ist, einer elektronischen Steuereinheit und nach Datenverarbeitung einer elektrohydraulisch arbeitenden Hydraulikeinheit (HCU) mit Elektromagnetventilen zugeführt wird, so daß in Abhängigkeit von dem Ausgangssignal der HCU unter Verwendung der Druckquelle einzelne oder alle Radbremsen mit einem geeigneten Bremsdruck beaufschlagt werden. Der Fahrzeugführer spürt dagegen lediglich die Rückwirkungskräfte eines Simulators.

Damit das Bremssystem auch in einem defektbedingten, stromlosen Zustand betätigbar ist, bedient man sich einer so genannten hydraulischen - da stromlosen - Rückfallebene, innerhalb derer die Bremsbetätigung unter Verwendung eines aufwändigen Sicherheitskonzeptes gewährleistet wird. Dabei ermöglichen vielfältige Sensorsignalauswertungsvorgänge Teilabschaltungen bestimmter Funktionen wie Bremsassistent, Fahrstabilitätsregelung (ESP) sowie schließlich eine Betätigung infolge Muskelkraft, indem der by-wire-Modus mit Simulatorfunktion abgeschaltet wird, und ein noch vorgesehener Tandemhauptbremszylinder hydraulisch mit den Radbremsen verbunden wird. Eine derartige Gestaltung der Rückfallebenen wird als unverzichtbar angesehen.

Derzeitige Entwicklungen der Fahrzeugtechnik ziehen jedoch auch regenerative Bremsmethoden in Erwägung, welche eine Umwandlung der zu verringernden kinetischen Fahrzeugenergie in elektrische Energie ermöglichen, indem ein Generator aufgeschaltet wird, welcher ein Bordnetz speist. Dies kann beispielsweise mit einer sogenannten Starter-Generator-Kombination (ISAD), mit Radnabenantrieben oder auf anderem Wege realisiert werden, so daß der Generatorbetrieb zumindest in einem gewissen Umfang Bremsfunktionen übernimmt. In dieser Betriebsart muss die Bremspedalweg/ Bremsdruckcharakteristik deutlich verändert werden.

Es muss daher bei regenerativen Bremssystemen mit einem Generator sichergestellt sein, dass während der Bremsung im Generatorbetrieb der Bremskraftverstärker nicht durch den Fahrerfuß bzw. das Bremspedal betätigt wird.

Aus der DE 197 50 977 A1 ist eine By-wire-Bremsbetätigungsvorrichtung bekannt, deren Bremspedal unter Zwischenschaltung eines Pedalwegsimulators über einen zweiteiligen Betätigungskolben mit einem Stößel des Hauptbremszylinders verbunden ist. Als nachteilig bei dieser By-wire-Bremsbetätigungsvorrichtung wird angesehen, dass eine Position des Bremspedals durch die Anlage des ersten, dem Bremspedal zugeordneten Bauteiles des Betätigungskolbens an dem zweiten Bauteil des

Betätigungskolbens, welches dem Stößel des Hauptbremszylinders zugeordnet ist, definiert ist und dadurch eine mechanische Entkopplung des Bremspedals von Kraftrückwirkungen der Kraftfahrzeugbremsanlage erst erfolgen kann, wenn der dynamische Bremskraftverstärker-Hub, d.h. der Hub des zweiten Bauteiles gleich oder größer ist als der Hub des dem Bremspedal zugeordneten, ersten Bauteiles. Ansonsten wird bei dieser bekannten By-wire-Bremsbetätigungsvorrichtung die Rückfallebene aktiviert.

Es ist eine Aufgabe der vorliegenden Erfindung, eine verbesserte By-wire-Betätigungsvorrichtung vorzuschlagen, welche zur Implementation in regenerative Bremssysteme geeignet ist, und im by-wire-Modus wie auch in der mechanisch/hydraulischen Rückfallebene gute Betätigungseigenschaften zeigt.

Die Aufgabe wird erfindungsgemäß dadurch gelöst, dass der Simulator an dem Bremspedal vorgesehen ist und ein Mittel vorgesehen ist, um den Abstand nach einem by-wire-Modus zu Beginn einer muskelkraftbetriebenen Bremsbetätigung automatisch zu reduzieren, wobei das Mittel mittels eines elektrischen, elektromagnetischen, hydraulischen oder pneumatischen Aktuators angesteuert ist, welcher in der Rückfallebene automatisch in eine Schließstellung zur Reduktion des Abstandes gelangt.

Die Position des Bremspedals ist durch die Anordnung des Simulators am Bremspedal durch den Simulator definiert, so dass das Bremspedal außer in der Rückfallebene jederzeit von den Kraftrückwirkungen der Bremsanlage frei ist und der Bremskraftverstärker im Generatorbetrieb nicht betätigt wird. Gliechzeitig wird das Betätigungsgefühl bei Aktivierung der muskelkraftbetriebenen Rückfallebene weiter verbessert.

Das Betätigungsbauteil ist geteilt ausgebildet, und die beiden Teile befinden sich im ausreichenden Abstand zueinander, so daß der Kraftfluß im by-wire-Modus permanent unterbrochen ist. Die im Hauptanspruch angegebene Merkmalskombination schafft die Voraussetzung für eine mechanische Entkoppelung des Bremspedals von nachgeordneten Betätigungsbauteilen im unbetätigten Zustand sowie im by-wire-Modus bei gleichzeitig unmittelbarer Durchgriffsmöglichkeit in der Rückfallebene (non-by-wire-Modus). Der Abstand gewährleistet auch die Entkopplung der Kraftrückwirkung für den Fall, dass der Hub des ersten Betätigungsbauteiles größer als der Bremskraftverstärker-Hub, d.h. der Hub des zweiten Betätigungsbauteiles ist.

Die Erfindung ermöglicht bei uneingeschränkter Funktionalität eine überraschend einfache by-wire-Bremsbetätigungsvorrichtung.

Bis zum Erreichen der hydraulisch/mechanischen Rückfallebene ist lediglich der Abstand zu überwinden, bevor ein Bremsdruckaufbau in den Radbremsen erfolgt. Mit anderen Worten ist im by-Wire-Modus sicherzustellen, daß permanent ein ausreichender Abstand zur mechanischen Entkopplung des Bremspedals gegeben ist.

In der Schließstellung des Aktuators wird der Abstand gewissermaßen abgebaut oder überbrückt. Der Abstand ist folglich nicht mehr zu überwinden, so daß sogar die Rückfallebene ein direktes Bremsgefühl bietet. Gleichzeitig sind aufgrund des vorgehaltenen Abstandes im by-wire-Modus fremdbetätigte Zustände möglich, ohne irgendwelche direkten Kraftrückwirkungen an den Fahrzeugführer weiter zu geben. Deren Erzeugung bleibt dem Simulator vorbehalten.

Nach einer ersten konstruktiven Ausgestaltung der Erfindung ist das Mittel als Kupplung zwischen zwei Betätigungsbauteilen vorgesehen. Die Kupplung kann als aktives Element über einen blockförmigen Körper verfügen, welcher beispielsweise Keilform aufweist, und als Schieber vorgesehen ist, der in den Abstand zwischen den Betätigungsbauteilen formschlüssig bringbar ist, und daher den Abstand überbrückt. Weiterhin kann die Kupplung eine Feder zur elastischen Vorspannung des blockförmigen Körpers sowie einen Elektromagneten zum Rückführen oder Rückhalten des blockförmigen Körpers in der Öffnungsstellung aufweisen. Durch die Verwendung der Feder zum Schließen des Kraftflusses strebt die Kupplung beim unbestromten Zustand automatisch in die Schließstellung.

Da die Radbremsen im by-wire-modus elektrisch angesteuert werden, fehlt eine rückwirkende Kraft des Hauptbremszylinders bzw. des nachgeschalteten Betätigungsbauteiles auf das Bremspedal. Um diese Kraft nachzubilden, wird ein entsprechender Kraftgeber (Simulator, Force-Feedback-Pedal) eingesetzt, beispielsweise eine Feder oder einen Motor, die in geeigneter Weise auf das Bremspedal entgegen dessen Betätigungsrichtung einwirken.

Als Druckquelle können grundsätzlich unterschiedlichste Vorrichtungen Verwendung finden. Beispielsweise kann ein hydraulischer Verstärker mit mindestens einer hydraulischen Pumpe vorgesehen sein, welche im by-wire-Modus durch elektrische Signale ansteuerbar ist. Innerhalb der Rückfallebene erfolgt die Betätigung der Radbremsen muskelkraftabhängig sowie hydraulisch über einen Hauptbremszylinder. Um eine impulsartige Druckabgabe der grundsätzlich trägheitsbehaftet wirksamen Pumpe zu ermöglichen, speist die Pumpe einen Hochdruckspeicher.

Gemäß einer anderen Alternative weist die Druckquelle einen pneumatischen Verstärker und zusätzlich eine hydraulische Pumpe auf, welche beispielsweise bei Defekt des pneumatischen Verstärkers oder bei nicht ausreichender Verstärkung angesteuert wird. Außerdem kann als Druckquelle ein so genannter aktiver - d. h. fremdansteuerbarer - pneumatischer Verstärker vorgesehen sein, welcher im by-wire-Modus durch elektrische Signale und in der Rückfallebene mechanisch durch die Betätigungsbauteile ansteuerbar ist.

Es ist ferner möglich, zur Verstärkung einen elektromotorisch betätigbaren Hauptbremszylinder vorzusehen.

Die nachstehenden Vorteile gelten für alle Verstärkerbauformen und werden exemplarisch am Beispiel eines pneumatischen Bremskraftverstärkers erläutert. Der Vorteil eines pneumatischen Verstärkers in Kombination mit einem elektromechanisch angesteuerten Simulator besteht darin, dass sich die Lage eines Betätigungsbauteiles des Verstärkers, welches wiederum von der Lage des Membrantellers des Verstärkers abhängt, in Abhängigkeit von der Lage des Bremspedals und damit des Ausgangssignals Betätigungssensors durch eine Programmierung in gewünschter Weise festlegen lässt. Mit anderen Worten kann der Abstand a in Abhängigkeit von sensorisch erfassten Randbedingungen auf vorbestimmte Werte eingestellt werden.

Wie schon erläutert lassen sich einzelne Stellungen des Bremspedals einer zugehörigen Lage des nachgeschalteten Betätigungsbauteiles und damit insbesondere der Lage des Membrantellers des pneumatischen Verstärkers zuordnen. Im Ergebnis lässt sich Bremspedalweg verkürzen und die Abstände können so gering wie nötig gestaltet werden. Umgekehrt kann lediglich geringfügigen Bewegungen des bremspedalseitigen Betätigungsbauteiles aus dessen Null-Lage heraus hinreichende Verschiebungen des Membrantellers und damit des Betätigungsbauteiles des Verstärkers zugeordnet werden. Mit anderen Worten wird in jedem Falle ein hinreichender Abstand a generiert.

Auch die mittels einer so genannten optimierten hydraulischen Bremsanlage unter Vakuumbremskraftverstärkereinsatz (OHBV) erreichbaren Funktionen lassen sich mit der erfindungsgemäßen Betätigungsvorrichtung durchführen. Bei OHBV-Systemen wird eine nicht ausreichende Vakuumbremskraftverstärkerfunktion durch andere Mittel kompensiert. Beispielsweise wird anhand geeigneter Sensorik der Differenzdruck in pneumatischen Verstärkerdruckkammern und zusätzlich der im Bremssystem von dem pneumatischen Verstärker generierte hydraulische Bremsdruck gemessen und mit einem Fahrerwunsch verglichen. Der Fahrerwunsch ist beispielsweise über die Betätigungsstellung des Bremspedals abgreifbar. Weicht jedoch der gemessene Bremsdruck von dem Fahrerwunsch hinreichend ab, so wird ein hydraulische Pumpe oder ein anderes Organ angesteuert, um für den Ausgleich des Druckdefizits zu sorgen.

Wenn der Vakuumbremskraftverstärker, der Hauptbremszylinder oder die nachgeschaltete Verteilvorrichtung mit einem geeigneten Sensor versehen wird, beispielsweise ein Drucksensor im Hauptbremszylinder, so lässt sich hierdurch ebenfalls der Systemdruck ermitteln und die OHBV-Funktion ermöglichen. In Bezug auf den Vakuumbremskraftverstärker können Sensoren eingesetzt werden, welche beispielsweise eine Verschiebung eines Membrantellers mittels eines Wegsensors ermitteln, oder durch Einsatz eines Drucksensors zur Ermittlung eines Druckes auf ein elastisches Redaktionselement (Reaktionsscheibe) des Verstärkers. Dabei kann das Signal des Wegsensors zur Ermöglichung einer Bremsassistentenfunktion (BA) herangezogen werden.

Vorteilhaft ist weiterhin, dass die von dem Simulator auf das Bremspedal ausgeübte Rückwirkung in Abhängigkeit von der Verstärkung des Verstärkers bzw. dem Ausgangsdruck des Hauptbremszylinders infolge Programmierung beliebig einstellbar ist. So kann beispielsweise das Anlaufen der Pumpe bei zu geringem Ausgangsdruck oder das nicht Erreichen eines Sollwertes durch Erhöhung der Rückwirkungskraft von dem Simulator auf das Bremspedal an den Fahrer gemeldet werden (beispielsweise durch verstärktes Zurückdrängen). Selbstverständlich ist es auch möglich, lediglich das ergänzende Verstärkungsmittel zuzuschalten und auf eine Rückmeldung zu verzichten, um den Fahrer nicht zu beunruhigen.

Selbstverständlich sind als Ersatz für das Zurückdrängen auch anderer Anzeigemöglichkeiten denkbar wie beispielsweise eine optische Warnung oder eine akustischer Warnung unter Verwendung entsprechender Anzeigeelemente.

Durch die Möglichkeit der Programmierung des gewünschten Verstärkeroutput in Abhängigkeit von der Stellung des Bremspedals lässt sich auch das Bremspedalgefühl bzw. die Gesamtverstärkung (Summe von beispielsweise Vakuumbremskraftverstärkerwirkung und zusätzlicher Verstärkerwirkung) beliebig den Wünschen anpassen. So kann beispielsweise das Verstärkungsverhältnis (Ausgangskraft im Verhältnis zur Eingangskraft) bei niedrigeren Bremskräften im Sinne einer besseren Dosierbarkeit niedrig gehalten werden, während bei mittleren Bremskräften ein hohes Verstärkungsverhältnis gewählt werden kann, was dann beim Übergang in den Aussteuerpunkt des Bremskraftverstärkers (Sättigung) allmählich zurückgeführt wird, um einen scharfen Knick und Dosierungsprobleme zu vermeiden.

Ein besonders großer Vorteil der Erfindung wird dadurch erreicht, dass im Falle des Ausfalls von elektrischen Ansteuerungssignalen eines aktiven Vakuumbremskraftverstärkers, insbesondere bei einem Ausfall einer Energieversorgung der Bremsbetätigungsvorrichtung, der Verstärker direkt mechanisch ansteuerbar ist, womit bei Ausfall der Elektronik eine gesicherte Rückfallebene vorliegt. In diesem Fall arbeitet ein pneumatischer Verstärker wie ein üblicher pneumatischer Bremskraftverstärker, bei hydraulischen Verstärkern tritt das hydraulische Übersetzungsverhältnis im Hauptbremszylinder in Aktion.

In Abhängigkeit von den zur Verfügung gestellten Sensoren kann auch eine Stufung der Rückfallebenen vorgesehen werden. Fällt beispielsweise einer von zwei Bremskreise aus, so kann die Verstärkung so eingerichtet werden, dass dem intakten Bremskreis eine höherer Bremsdruck zuführt wird. Wenn sich das Fahrzeug im Grenzbereich der Fahrstabilität befindet, empfiehlt sich der Einsatz von Antiskid-Maßnahmen wie Antiblockiersystem (ABS) oder Elektronisches Stabilitätsprogramm (ESP). Vorteilhafterweise wird der Ausfall eines Bremskreises eine Warnung des Fahrers durch oben genannte Anzeigeelemente auslösen.

Auch für ESP-Funktionen ist die erfindungsgemäße Bremsbetätigungsvorrichtung mit großem Vorteil einsetzbar. Da die ESP-Funktionalität auf einer, die Fahrstabilität gefährdende Geschwindigkeit beruht, und eine radindividuelle Betätigung ohne Bremswunsch erfordert, kommt es auf besonders schnelle Druckimpulse an ausgewählten Radbremsen an. Dies wird erfindungsgemäß gewährleistet, indem ein gesonderter Verstärker wie insbesondere ein pneumatisch arbeitender Verstärker, ein hydraulischer Verstärker oder ein sonstiges Mittel zugeschaltet wird. Die Verhältnisse sind in etwa vergleichbar einer Antriebs-Schlupf-Regelung (ASR), innerhalb derer Antriebsschlupf durch Brems- und ggf. Motorreingriff reduziert werden soll.

Die erfindungsgemäße Bremsbetätigungsvorrichtung lässt weiterhin zu, dass der Verstärker auch in Abhängigkeit von weiteren, unabhängig von der Lage des Bremspedalhebels auftretenden Parametern angesteuert werden kann, wie beispielsweise ABS, ESP, Intelligente GeschwindigkeitsRegelung (ICC), ASR und anderen Signalen, die durch den Fahrzustand des Fahrzeugs oder einen Fahrerwunsch wie beispielsweise das Anfahren am Berg ausgelöst werden.

Bei Verwendung eines aktiven Vakuumbremskraftverstärkers ist vorteilhaft kein Hochdruckspeicher erforderlich und die Herstellung des Bremssystems erfolgt kostengünstig bei raumsparender Anordnung. Sensorsignale werden einer zentralen Steuereinheit zugeführt, und der Sensorbedarf ist generell gering. Für die meisten der genannten Funktionen genügt ein Weg- oder Drehwinkelsensor am Bremspedal zur Feststellung des Fahrerwunsches, und der beschriebene Wegsensor zum Feststellen der Lage des Membrantellers und deren Abweichung zwecks Regelung des Verstärkers bzw. zur Feststellung des OHBV-Falles, sowie ein hydraulischer Drucksensor in mindestens einem Bremskreis zur Ermittlung des Istwertes im Bremssystem und zur Feststellung der Abweichung des Ist-Wertes von dem Fahrerwunsch unter Berücksichtigung von Sicherheitsmaßnahmen und dem OHBV-Modus. Wenn ein so genanntes Force-Feedback-Pedal Verwendung findet, kann dem Force-Feedback-Aktuator (Rückwirkungskrafterzeuger) ein Drehwinkel- oder Wegsensor zugeordnet werden, so daß im Pedalbereich insgesamt zwei Drehwinkel bzw. Wegsensoren vorgesehen sind, deren Signale der zentralen Steuereinheit zugeführt werden.

Ein pneumatischer Bremskraftverstärker kann zusätzlich über einen pneumatischen Drucksensor oder Differenzdrucksensor verfügen, welcher den pneumatischen Druckes bzw. eine Druckdifferenz zwischen pneumatischen Kammern sensiert.

Auf Grund aller Sensorinformationen ist die elektronische Steuereinheit in der Lage, eine Fehlfunktion wie beispielsweise Lufteinschluss oder Kreisausfall in einem Bremskreis oder der gesamten Bremsanlage zu erkennen und geeignete Gegenmaßnahmen, wie insbesondere die Rückfallebene, auszulösen.

Zusätzlich erlaubt es die oben genannte Sensorik, den Aussteuerpunkt des Verstärkers oder einen nicht ausreichenden Unterdruck in einer Unterdruckkammer zu erkennen und über die Elektronikeinheit die hydraulische Pumpe zwecks zusätzlicher Verstärkung zu starten.

Im Zusammenhang mit dem Hauptanspruch wurde erläutert, dass die Erfindung eine mechanische Entkopplung des Bremspedals ermöglicht. Da die Erfindung voraussetzt, dass der Verstärker nicht nur in der Rückfallebene über das Bremspedal mechanisch angesteuert werden kann, sondern im by-wire-Modus durch ein elektrisches Betätigungssensor-Signal, ist es durch eine entsprechende Programmierung immer möglich, den Verstärker durch eine geeignete Verstärkung des elektrischen Signals derart anzusteuern, dass sein Betätigungsbauteil vor dem mechanischen Angriffspunkt des Bremspedals in einem vorbestimmten Abstand voraus läuft. Das Betätigungssensor-Signal ist dabei von der Lage des Bremspedals abhängig, so dass bei einer bestimmten Verschiebung des Bremspedals der Verstärker auch um einen vorgegebenen Betrag angesteuert wird und damit sein Betätigungsbauteil um einen entsprechenden Weg mitnimmt. Dieser Weg wird nun so gewählt, dass zwischen dem mechanischen Angriffspunkt des Bremspedals am Betätigungsbauteil und dem Betätigungsbauteil selbst immer ein bestimmter Abstand bleibt, was zur mechanischen Entkoppelung zwischen Bremspedal und Betätigungsbauteil führt.

Für den Fall, dass beispielsweise die Energieversorgung für den Verstärker oder die Arbeitsweise des Verstärkers selbst gestört ist, wird erfindungsgemäß der Abstand überbrückt und das Bremspedal wirkt nunmehr zumindest mittelbar mechanisch auf das Betätigungsbauteil des Verstärkers ein. Es ist also auch in diesem Fall für den Fahrer noch möglich, die Bremse zu betätigen, wobei allerdings die verstärkende Kraft des Verstärkers nicht mehr gegeben ist. Dieser Zustand wird als Rückfallebene bezeichnet, weil die Bremsbetätigungsvorrichtung in der genannten Notsituation von der elektrischen Ansteuerung des Verstärkers (by-wire) auf die direkte mechanisch/hydraulische Ansteuerung zurück fällt.

Die oben genannten Bremssysteme basieren ganz generell auf dem elektrohydraulischen Prinzip in Bezug auf alle Radbremsen. Es versteht sich jedoch, daß die Erfindung mit besonderem Vorteil auch bei so genannten Hybridsystemen eingesetzt werden kann, bei denen beispielsweise ein Paar hydraulischer Radbremsen für eine Vorderachse und ein Paar elektromechanischer Aktuatoren für eine Hinterachse vorgesehen sind. Derartige Systeme sind sogar auf Basis einer 12(14)-Volt-Bordnetzstruktur darstellbar, und verfügen über den Vorteil, daß bei Stromausfall in einer Rückfallebene dennoch die hydraulischen Radbremsen der Vorderachse direkt betätigbar sind.

Ein Ausführungsbeispiel der Erfindung wird nachfolgend anhand der Zeichnung erläutert. Darin zeigt jeweils schematisch
Fig. 1 eine erste Ausführungsform einer Bremsbetätigungsvorrichtung mit Vakuumbremskraftverstärker in einem unbetätigten Zustand,
Fig. 2 die Bremsbetätigungsvorrichtung nach Fig. 1 im Arbeitszustand,
Fig. 3 eine Ansicht einer , leerwegreduzierten Ausführungsform,
Fig. 4 einen Schnitt durch die Ausführungsform nach Figur 3,
Fig. 5 einen Schnitt durch eine zweite, leerwegreduzierte, nicht beanspruchte Ausführungsform,
Fig. 6 und 7 Skizzen zur Verdeutlichung einer dritten, leerwegreduzierten Ausführungsform, und
Fig. 8 eine Anwendung einer Bremsbetätigungsvorrichtung bei einem Hybridbremssystem.

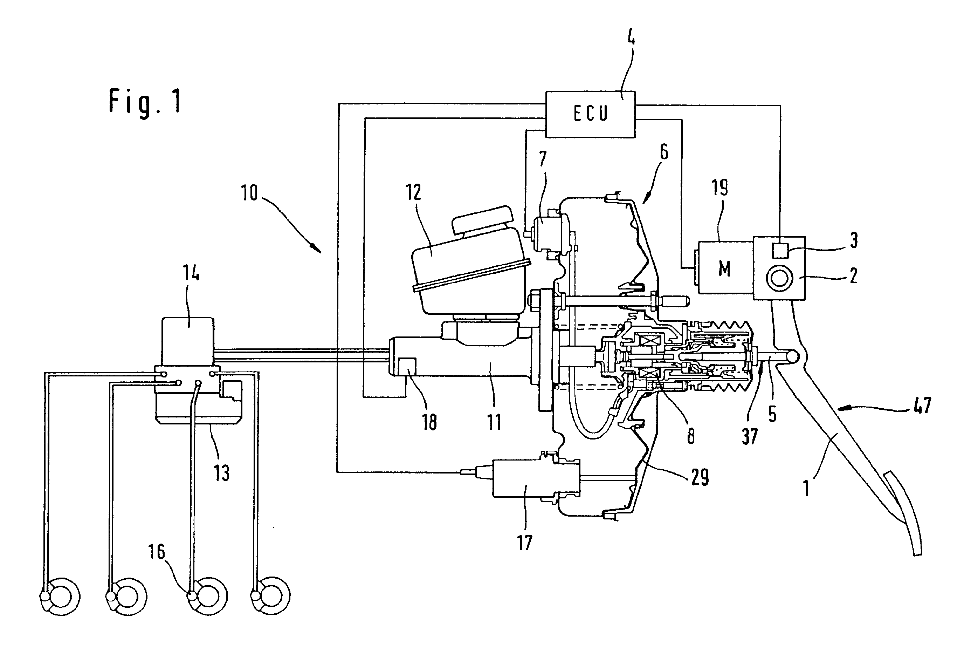

Eine Bremsbetätigungsvorrichtung besitzt gemäß Fig. 1 ein Bremspedal 1 welches mit einem Simulator 2 versehen ist. Der Simulator 2 weist wenigstens einen, vorzugsweise zwei redundant vorgesehene Betätigungssensoren 3 auf, deren Ausgangsignale einer elektronischen Steuerung 4 (ECU) zugeführt werden. Das Bremspedal 1 lässt sich über ein Betätigungsbauteil 5 eines pneumatischen Verstärkers 6 mechanisch mit dem Verstärker 6 koppeln. Eine derartige Verbindung ist bei den bekannten pneumatischen Verstärkern 6 üblich, da sie durch das Bremspedal 1 über das Betätigungsbauteil 5 mechanisch analog angesteuert werden. Für den Fall, dass die Elektronikeinheit 4 ausfällt, ist eine derartige Ansteuerung auch bei der erfindungsgemäßen Bremsbetätigungsvorrichtung möglich und bildet eine sichere Rückfallebene. Der Verstärker 6 ist außer über das Betätigungsbauteil 5 aber auch durch ein Ausgangsignal der elektronischen Schaltung 4 über einen Anschluss 7 elektrisch ansteuerbar. Das geschieht mittels eines magnetischen Antriebs 8, der an dem Betätigungsbauteil 5 angreift und der über den Anschluss 7 mit Stromsignalen versorgt wird.

Zu einer Verteilvorrichtung 10 der Bremsbetätigungsvorrichtung gehören ein Hauptbremszylinder 11 mit einem zugehörigen Behälter 12 und eine Ventilschaltung 13, die gegebenenfalls mit einer Pumpe oder einem Pumpenmotor 14 versehen ist. Von Ausgängen der Ventilschaltung 13 werden Radbremsen 16 betätigt. Der Verstärker 6 ist mit einem Wegsensor 17 versehen, während der Hauptbremszylinder 11 an seinem Ausgang einen Drucksensor 18 aufweist.

Der Simulator 2 kann mechanisch ausgebildet sein, und beispielsweise eine Feder aufweisen. Darüber hinaus ist es möglich, den Simulator zwecks einfacherer Abänderung der Kennlinie elektrisch anzusprechen, indem man Ihn mit einem Motor 19 versieht, durch welchen die gewünschte Rückwirkungskraft auf das Bremspedal 1 ausgeübt wird. Hierdurch wird ermöglicht, daß der Fahrer die Wirkung der Bremse in bekannter Weise kraftabhängig dosieren kann, selbst wenn das Bremspedal 1 (im by-wire-Modus) von dem Bremssystem mechanisch entkoppelt ist.

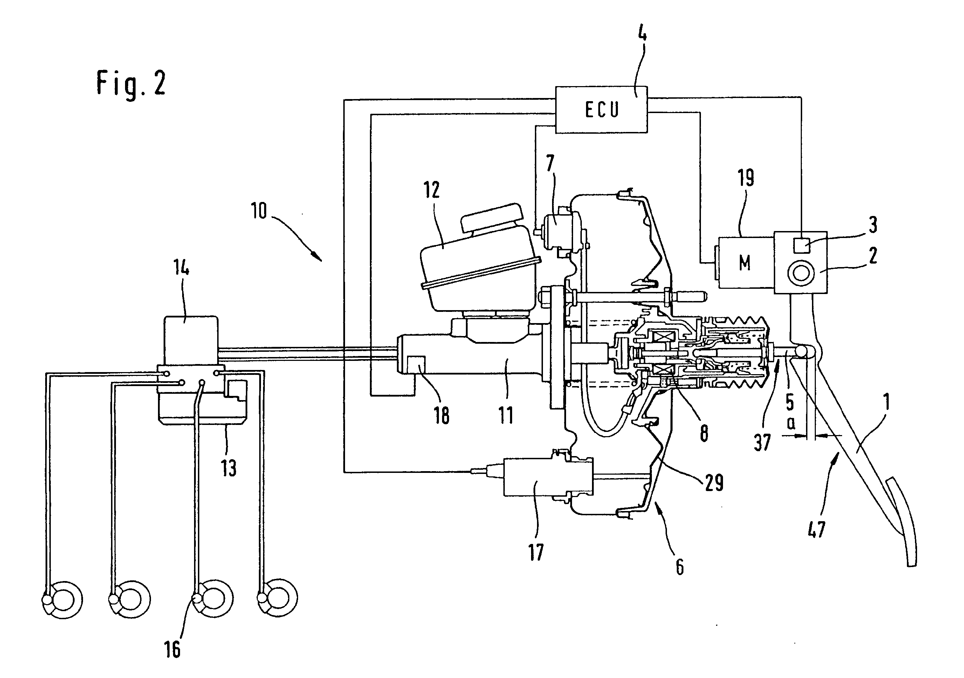

Fig. 2 zeigt die im by-wire-Modus erwünschte mechanische Entkoppelung des Bremspedals 1 von dem Verstärker 6 bzw. dessen Eingangsglied 5. Wird in diesem Zustand das Bremspedal 1 betätigt, so gibt der Betätigungssensor 3 an die Elektronikeinheit 4 ein Signal ab, welches die Winkelstellung des Bremspedals 1 beschreibt. Durch ein, in der elektronischen Steuerung 4 gespeichertes entsprechendes Programm wird in Abhängigkeit von dem Ausgangsignal des Betätigungssensors der magnetische Antrieb 8 betätigt. Dies entspricht einer bestimmten mechanischen Eingangskraft am Betätigungsbauteil 5, wie sie bei den üblichen Verstärkern 6 durch das Bremspedal 1 ausgeübt wird. Durch das gespeicherte Programm kann über den elektromagnetischen Antrieb 8 einer Bewegung des Bremspedals 1 eine entsprechende Bewegung des Betätigungsbauteiles 5 in weiten Grenzen zugeordnet werden. Diese Bewegung wird dabei so gewählt, dass das Betätigungsbauteil 5 einen hinreichend kleinen Abstand a von dem Bremspedal behält, so dass das Betätigungsbauteil von dem Bremspedal 1 mechanisch entkoppelt ist.

Mit Hilfe des Wegsensors 17 kann der von einem Membranteller 29 des Verstärkers 6 tatsächlich zurückgelegte Weg bestimmt werden, wodurch der Verstärker 6 auf den gewünschten Wert geregelt werden kann. Weicht dieser gemessene Weg von dem durch die Elektronikeinheit 4 vorgegebenen Weg dauerhaft hinreichend ab, beispielsweise durch einen Ausfall oder einen Fehler im Bremssystem, so wird ein Fehlersignal gemeldet, welches geeignete Prozesse in dem Bremssystem auslöst. In entsprechender Weise wirkt der Drucksensor 18 im oder am Ausgang des Hauptbremszylinders 11.

Die Funktionsweise lässt sich somit kurz wie folgt angeben. Ein elektromechanisches Stellglied zur Erzeugung der Bremspedalsimulationskraft erkennt mittels der geeigneten Sensorik 3 den Fahrerwunsch und übermittelt diesen der ECU 4, die wiederum den fremd ansteuerbaren Verstärker 6 ansteuert. Der Verstärker 6 läuft schneller in Richtung des Hauptbremszylinders 11 als das Bremspedal 1, somit erzeugt der Simulator 2 über den Motor 19 eine Gegenkraft zur Fahrerfußkraft und der Fahrer ist unter normalen Umständen entkoppelt wie bei einem "brake-by-wire"-System. Die Eingangskraftcharakteristik und das Verzögerungsverhalten sind frei und unabhängig voneinander programmierbar. Fallen ECU 4 oder Simulator 2 aus, kann das System wie eine konventionelle Bremsanlage betrieben werden.

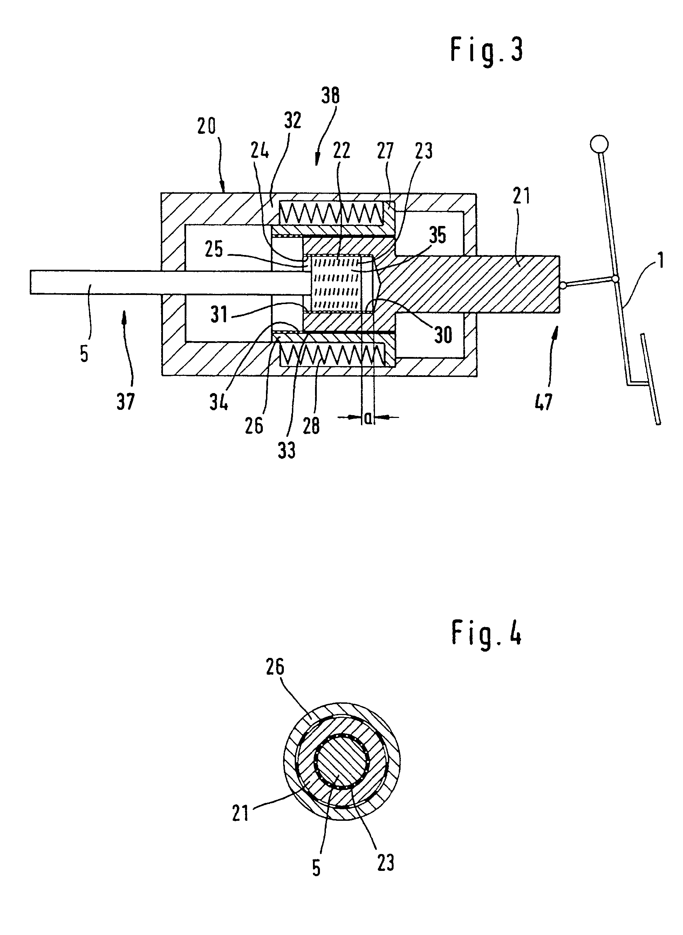

Die Vorteilhafte Weiterbildung der Erfindung gemäß Fig. 3 und 4 zeigt eine Kupplung 20 mit gleichzeitiger Simulatorfunktion, wobei das Betätigungsbauteil 5, welches zur Betätigung des sowohl elektrisch als auch mechanisch ansteuerbaren Verstärkers 6 oder zur Ansteuerung des Hauptbremszylinders 11 bzw. eines Tandem-Hauptbremszylinders dienen kann. Wesentlich ist, dass das Betätigungsbauteil 5 in seiner Lage durch Steuersignale der ECU 4 verändert werden kann, was auf Signale des Betätigungssensors zurückgeht. Dies kann beispielsweise dadurch geschehen, dass der Verstärker 6 infolge der Signale des Betätigungssensors angesteuert wird oder dass der Hauptbremszylinder 11 folglich durch die Druckerhöhung einer hydraulischen Pumpe beaufschlagt wird, wobei die Pumpe wiederum von der ECU 4 angesteuert wird. Somit hängt die Lage des Betätigungsbauteiles 5 von dem Ausgangsignal des Betätigungssensors ab. Das Ausgangsignal des Betätigungssensors ist wiederum von der Lage des Bremspedals 1 abhängig. Ein hierzu notwendiger Wegsensor ist in Fig. 3 nicht dargestellt.

Die in Fig. 3 gezeigte Kupplung 20 schafft die Möglichkeit, wahlweise das Bremspedal 1 mit dem Betätigungsbauteil 5 mechanisch zu koppeln oder diese Kopplung aufzuheben. Wichtig dabei ist, dass das Betätigungsbauteil 5 und eine Kupplungswelle 21 der Kupplung 20 beim Übergang zu der mechanischen Kopplung in der zueinander befindlichen axialen Lage miteinander verbunden werden, in der sie sich gerade befinden, wenn der Befehl zur mechanischen Kopplung eintritt. Hierzu ist eine Mantelfläche 35 eines Endes des Betätigungsbauteiles 5 mit Reihen 22 von hintereinander liegenden Vorsprüngen 23 versehen, denen entsprechende Reihen 31 von Vorsprüngen 30 an einer Mantelfläche 24 einer Längsbohrung 25 in der Kupplungswelle 21 zugeordnet sind. Diese Reihen 22,31 sind sowohl auf der Mantelfläche 24 als auch am Ende des Einganggliedes 5 in gleichen Winkelabständen auf der Oberfläche gleichmäßig verteilt. Die Abstände der Vorsprünge 23,30 sind dabei derart gewählt, dass bei entsprechender Drehlage von Betätigungsbauteil 5 und Kupplungswelle 21 die Vorsprünge 23,30 der genannten Bauteile fluchtend hintereinander liegen können. In diesem Falle findet eine Hinterschneidung der Vorsprünge 23,30 von Betätigungsbauteil 5 und Kupplungswelle 21 statt, so dass diese beiden Bauteile in axialer Richtung miteinander gekoppelt sind. Werden Betätigungsbauteil 5 und Kupplungswelle 21 um einen geeigneten Winkelbereich aus dieser Lage verdreht, so liegen die Vorsprünge 30 der Kupplungswelle 21 in den zwischen den Reihen 22 liegenden, von Vorsprüngen 23 freien Bereichen des Betätigungsbauteiles 5, so dass die beiden Bauteile in dieser Lage in Längsrichtung nicht miteinander gekoppelt sind.

Im Normalbetrieb, bei der das Betätigungsbauteil 5 von der Kupplungswelle 21 entkoppelt ist, liegt zwischen dem Ende des Betätigungsbauteiles 5 und einer zugehörigen Anlagefläche an der Kupplungswelle 21 ein Abstand a vor. Im Normalbetrieb soll weiterhin eine rückwirkende Kraft auf das Bremspedal 1 ausgeübt werden. Das geschieht dadurch, dass die Kupplungswelle 21 mit einem als Hülse ausgebildeten Übertragungsgliedes 26 gekoppelt ist. Es wird also sichergestellt, dass in der Drehlage, in der das Betätigungsbauteil 5 von der Kupplungswelle 21 entkoppelt ist, eine Kopplung zwischen der Kupplungswelle 21 und Übertragungsglied 26 stattfindet. Die Kopplung kann dabei durch geeignete Vorsprünge 33,34 auf einer äußeren Mantelfläche der Kupplungswelle 21 sowie an einer inneren Mantelfläche der Übertragungsglied 26 geschehen, wie dies im Zusammenhang mit Druckstange und Kupplungswelle weiter oben erörtert wurde. Ist die Kupplungswelle 21 mit der Übertragungsglied 26 in Längsrichtung mechanisch verbunden, so wirkt eine Konsole 27 der Übertragungsglied 26 auf eine Feder 28, welche sich an einem Gehäuse 32 der Kupplung 20 abstützt und wodurch die gewünschte Simulator-Kraft ausgeübt wird.

Wird bei dem Bremssystem die Rückfallebene eingestellt, so wird die Kupplungswelle 21 gegenüber dem Eingangslied 5 um einen geeigneten Betrag verdreht, wodurch die Kupplungswelle 21 mit dem Betätigungsbauteil 5 gekoppelt, aber von der Übertragungsglied 26 entkoppelt wird. Die Vorsprünge 23,30 können mit geeigneten Einlauf-Schrägen versehen sein, so dass gewährleistet ist, dass die Vorsprünge 23,30 an den einander zugeordneten Flächen (unabhängig von der Lage in Längsrichtung dieser Bauteile zueinander) hintereinander verschränkt werden können und sich so hintergreifen. Auf diese Weise ist sichergestellt, dass nicht erst die Kupplungswelle 21 den Abstand a überwinden muss, ehe sie an dem Betätigungsbauteil 5 mechanisch angreift. Hierdurch wird ein Abstand in der Größenordnung des Abstandes a vermieden.

Die Wirkungsweise der Weiterbildung nach Fig. 3 und 4 lässt sich kurz wie folgt angeben. Ist die Kupplung 20 im Normalbetrieb, geht der Kraftfluss von dem Bremspedal 1 über die Kupplungswelle 21 in die Übertragungsglied 26 und letztlich in die Feder 28, welche sich am Gehäuse 32 abstützt. Die Verbindung zwischen Kupplungswelle 21 und Übertragungsglied 26 (Normalbetrieb) oder Kupplungswelle 21 und Betätigungsbauteil 5 (Rückfallebene) erfolgt über speziell ausgeformte Vorsprünge 23,30,33,34, welche beispielsweise als Gewindestränge ausgebildet sind. Auf diese Weise ist gewährleistet, dass im Normalzustand die Kupplungswelle 21 über das Betätigungsbauteil 5 gleiten kann und die Kupplungswelle 21 mit der Übertragungsglied 26 verbunden ist. Die Kupplungswelle 21 kann durch einen Verstellantrieb begrenzt verdreht werden. Auf diese Weise wird erreicht, dass die Kupplungswelle 21 entweder mit der Übertragungsglied 26 im Kraftfluss steht, oder in der Rückfallebene mit dem Betätigungsbauteil 5. Bei einem Energieausfall wird die Kupplungswelle 21 durch einen Rückstellmechanismus so verdreht, dass die Vorsprünge 23,30 zwischen Betätigungsbauteil 5 und Kupplungswelle 21 im Eingriff sind. Die Bremspedalkraft wird somit direkt in Richtung des Verstärkers 6 oder des Hauptbremszylinders 11 durchgeleitet. Die Vorsprünge 33,34 zwischen Kupplungswelle 21 und Übertragungsglied 26 sind dabei nicht mehr im Eingriff und somit kann die Kupplungswelle 21 durch die Übertragungsglied 26 durchgleiten.

Durch die Konstruktion wird sichergestellt, dass beim Übergang in die Rückfallebene bei bereits getretenem Bremspedal 1 kein Bremspedalweg verloren geht und somit die Bremswirkung bzw. der Druck in den Bremsleitungen erhalten bleibt. Wird im Normalbetrieb das Bremspedal 1 getreten, wird dies von einer Fahrerwunscherkennung sensiert und der nachgeschaltete Verstärker 6 aktiviert. Dadurch wird das Betätigungsbauteil 5 von der Kupplungswelle 21 weggezogen, so dass sich diese beiden Wellen im Normalfall nicht berühren. Das gleiche gilt bei dem Lösen der Bremse. Die Kupplungswelle 21 wird schnell genug in die Ausgangslage gefahren, so dass eine Berührung zwischen Kupplungswelle 21 und Betätigungsbauteil 5 vermieden wird. Für die Feder 28 können sämtliche gängige Federsysteme wie beispielsweise Spiralfedern, Elastomerfedern, Tellerfedern, Blattfedern und Tellerfedern die wie Blattfedern zusammengefasst sind, verwendet werden. Der Vorteil dieser Weiterbildung liegt in der modularen Bauweise, wodurch sie bei verschiedenen Verstärkerlösungen verwendet werden. Zusätzlich wird im Gegensatz zum bisherigen EHB-System in der Rückfallebene kein Bremspedalweg verloren. Hinzu kommt, dass es sich bei dieser Lösung um ein "trockenes" System handelt und somit auch im Fahrgastraum integriert werden kann. Es handelt sich somit um einen Simulator mit integrierter Kupplung um im Normalbetrieb das Bremspedalgefühl über eine Feder 28 zu erzeugen und in der Rückfallebene einen Durchgriff zum Hauptbremszylinder 11 zu ermöglichen. Statt der Gewindestränge können auch Kugelreihen verwendet werden, über die dann der Kraftfluss, ähnlich wie bei Kugelgewindetrieben, erfolgt.

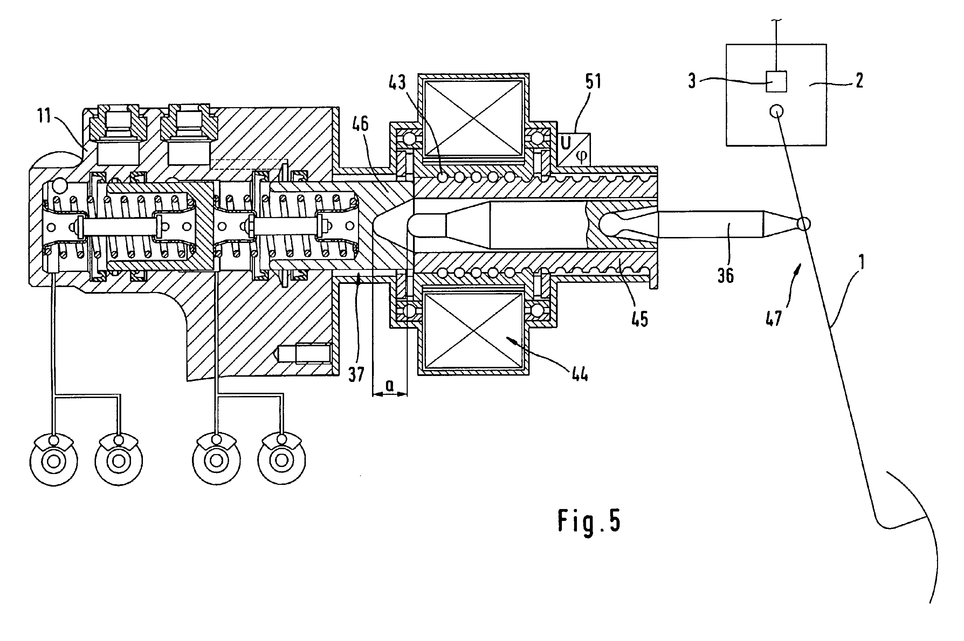

Eine Lösung zur elektromotorischen Betätigung eines Hauptbremszylinders 11 mittels eines Kugelgewindetriebes 43 ist in Fig. 5 dargestellt. Eine Bewegung eines by-wire-Bremspedals 1 wird sensorisch 3 erfasst und das Signal einer nicht dargestellten Steuereinheit zugeführt. Weil das Bremspedal 1 mechanisch entkoppelt ist (Abstand a) verspürt der Fahrer lediglich Rückwirkungskräfte, welche infolge eines Simulators 2 erzeugt werden. Die Steuereinheit 4 bewirkt die Bestromung eines Elektromotors 44, was zu einer Rotordrehbewegung führt, deren Bewegung mittels dem Kugelgewindetrieb 43 in eine axial gerichtete Verschiebungsbewegung einer rohrförmigen Hülse 45 umgewandelt wird, so daß auf diesem Wege ein Hydraulikkolben 46 (als nachgeschaltetes Betätigungsbauteil) des Hauptbremszylinders 11 betätigt wird. An dem Bremspedal 1 ist ferner wenigstens ein Betätigungsbauteil 47 angelenkt, welches innerhalb der rohrförmigen Hülse 45 verschiebbar angeordnet ist, und dessen Ende im unbetätigten Zustand sowie im by-wire-Modus einen Abstand a zu dem nachgeschalteten Betätigungsbauteil 46 (Hydraulikkolben) aufweist, was die Entkopplung bewirkt. In der Rückfallebene wird der Abstand a überwunden, und es erfolgt eine unmittelbar direkte Betätigung über das Bremspedal 1 und die beiden Betätigungsbauteile 37,47.

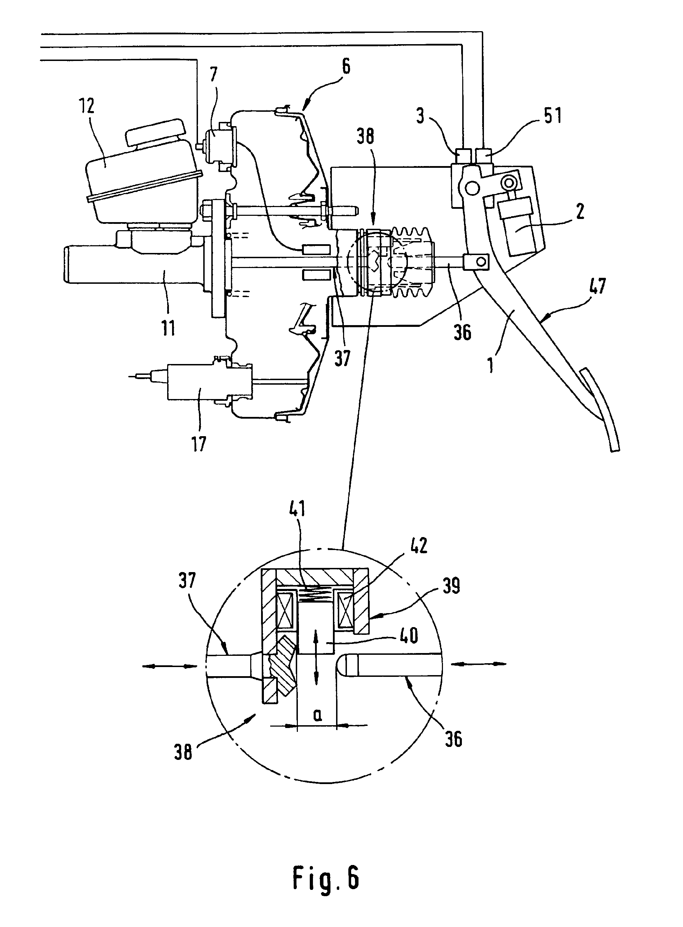

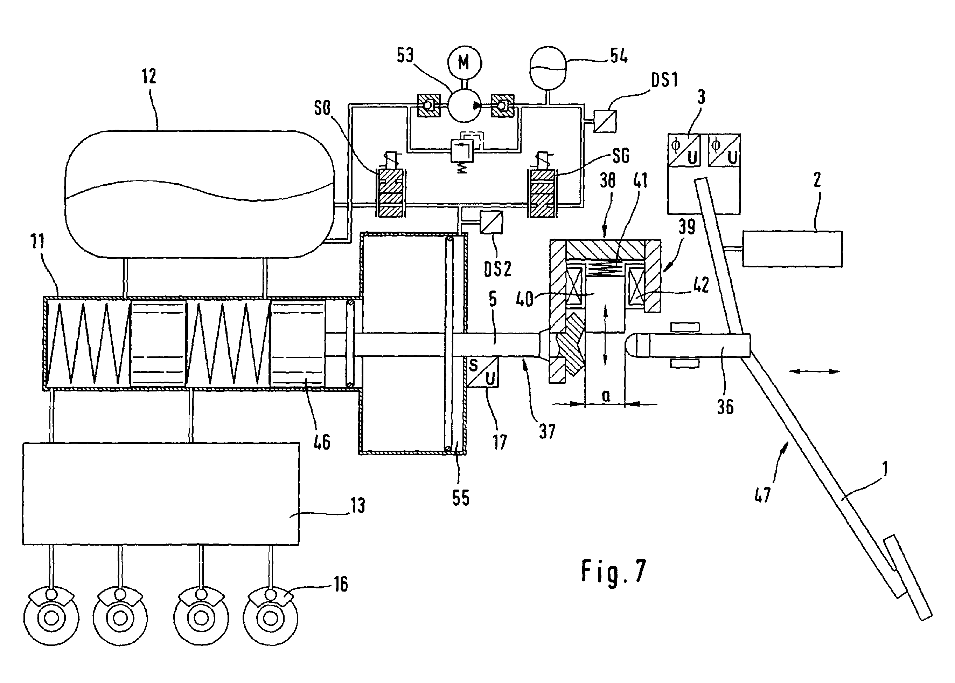

Die Ausführungsformen gemäß Fig. 6 und 7 verfügen über eine prinzipiell miteinander übereinstimmende Kupplung 38 zur Reduktion des Abstandes a in der Rückfallebene. Obwohl diese Kupplung 48 in Fig. 6 in Verbindung mit einem Vakuumbremskraftverstärker 6 dargestellt ist, können wie bereits beschrieben unterschiedliche Verstärkerkonzepte wie insbesondere hydraulische Verstärker Verwendung finden.

Gemäß Fig. 6 ist die Kupplung 38 zwischen den beiden Betätigungsbauteilen 37,47 vorgesehen, und verfügt über einen blockförmigen Körper 40, welcher derart formschlüssig in den Abstand a einbringbar ist, daß der Abstand a formschlüssig überbrückt wird. Die Anordnung ist einem Türriegel vergleichbar, und der Körper 40 wird in der Rückfallebene infolge fehlender Bestromung einer rückhaltenden Vorrichtung zwecks Abstandreduktion automatisch zwischen die beiden Betätigungsbauteile 37,47 geschoben. Als Antrieb ist in diesem Zusammenhang eine elastisch vorgespannte Feder 41 vorgesehen, welche den Körper 40 in den Zwischenraum drängt. Die Funktion der Vorrichtung gemäß Fig. 7 stimmt mit Ausnahme des Verstärkers damit überein.

Der anhand Fig. 7 beispielhaft verdeutlichte hydraulische Verstärker umfasst eine aus dem Behälter 12 ansaugende motorgetriebene Pumpe 53, welche einen Hochdruckspeicher 54 speist. Zur Druckerhöhung kann der Hochdruckspeicher 54 eine Druckkammer 55 füllen. Die Druckregelung erfolgt mittels eines stromlos geschlossenen Elektromagnetventils (SG) und einem stromlos geöffneten Elektromagnetventil (SO) in einem Behälterabzweig. Nur durch Öffnen des SG-Ventiles kann Volumen aus dem Hochdruckspeicher 54 in die Druckkammer 55 abgelassen werden. Vor dem SG-Ventil und nach dem SG-Ventil ist jeweils ein Drucksensor DS 1 und DS 2 angeordnet, wobei DS 1 eine Speicherfüllstandüberwachung zwecks Pumpeneinschaltung und DS2 die Druckregelung in den Bremskreisen ermöglicht.

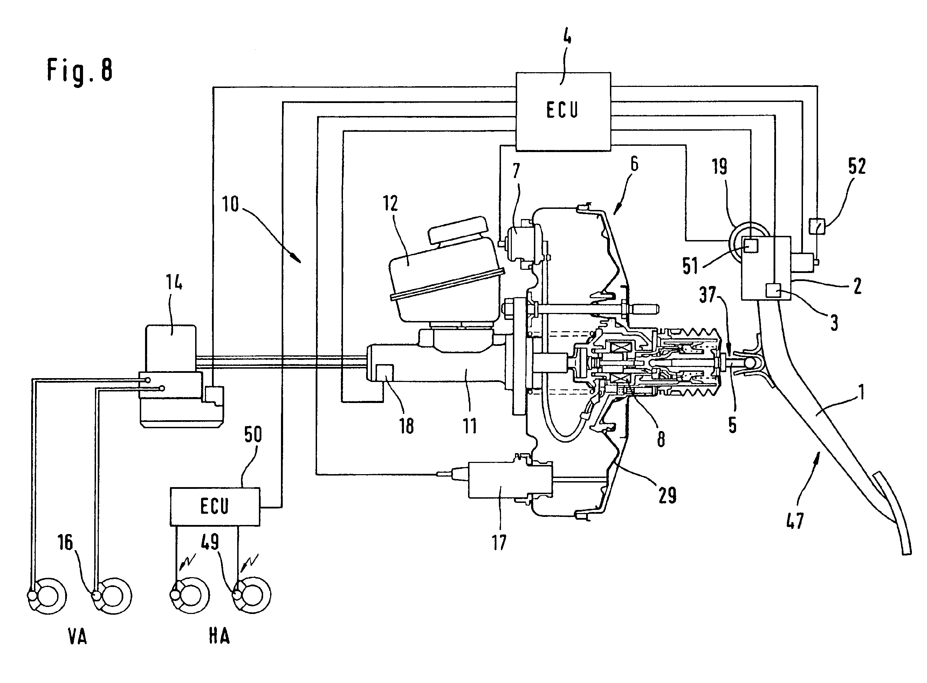

Die Fig. 8 verdeutlicht ein by-wire-Bremsbetätigungssystem mit einem elektronisch betätigbaren, pneumatischen Bremskraftverstärker 6 in Verbindung mit zwei elektromechanisch über eine gesonderte Elektronikeinheit (50,ECU) ansteuerbaren elektromechanischen Radbremsen 49 für eine Hinterachse, und mit zwei elektrohydraulisch ansteuerbaren Radbremsen 16 für eine Vorderachse. Die hydraulischen Radbremsen 16 der Vorderachse werden über eine Verteilvorrichtung (Hydraulikeinheit, HCU;10)) gespeist, welche wiederum über eine Elektronikeinheit 4 (ECU) angesteuert wird. Dieser ECU 4 werden Signale eines (Membran)Wegsensors 17 und eines Drucksensors 18 zugeführt, welcher in dem Bremskreis der vorderen Radbremsen 16 angeordnet ist. Des Weiteren erhält die ECU 4 die Signale von zwei Weg- oder Drehsensoren 3,51 welche dem Bremspedal 1 und einem Simulator (Force-Feedback-Pedal) 2 zur Erzeugung von Rückwirkungskräften zugeordnet sind. Ein Bremslichtschalter 52 speist ebenfalls sein Signal in die ECU 4 ein. Die ECU 4 bewirkt zusammen mit dem Verstärker 6 und der Verteilvorrichtung 10 die Versorgung der hydraulischen Radbremsen 16 mit dem erforderlichen hydraulischen Druck und ermöglicht ferner eine fahrerunabhängige Ansteuerung des Bremskraftverstärkers 6 wie auch die Ansteuerung des Simulators 2.

### Bezugszeichenliste

- 1: Bremspedal
- 2: Simulator
- 3: Betätigungssensor
- 4: Elektronikeinheit
- 5: Eingangsglied
- 6: Verstärker
- 7: Anschluss
- 8: Antrieb

- 10: Verteilvorrichtung
- 11: Hauptbremszylinder
- 12: Behälter
- 13: Ventilschaltung
- 14: Pumpenmotor

- 16: Radbremsen
- 17: Wegsensor
- 18: Drucksensor
- 19: Motor
- 20: Kupplung
- 21: Kupplungswelle
- 22: Reihen
- 23: Vorsprung
- 24: Mantelfläche
- 25: Längsbohrung
- 26: Übertragungsglied
- 27: Konsole
- 28: Feder
- 29: Membranteller
- 30: Vorsprung
- 31: Reihe
- 32: Gehäuse
- 33: Vorsprung
- 34: Vorsprung
- 35: Mantelfläche
- 36: Bauteil
- 37: Betätigungsbauteil
- 38: Mittel
- 39: Aktuator
- 40: Körper
- 41: Feder
- 42: Elektromagnet
- 43: Kugelgewindetrieb
- 44: Elektromotor
- 45: Hülse
- 46: Hydraulikkolben
- 47: Betätigungsbauteil

- 49: elektromechanische Radbremse
- 50: Elektronikeinheit
- 51: Weg- oder Drehsensor
- 52: Bremslichtschalter
- 53: Pumpe
- 54: Hochdruckspeicher
- 55: Druckkammer

- SG: Elektromagnetventil
- SO: Elektromagnetventil
- DS1: Drucksensor
- DS2: Drucksensor

## Patentansprüche

1. By-Wire-Bremsbetätigungsvorrichtung zur Betätigung einer regenerativen Kraftfahrzeugbremsanlage mit einem mittels eines Bremspedals (1) mechanisch beaufschlagbaren Simulator (2), wobei der Simulator (2) wenigstens einen Betätigungssensor (3) aufweist und ein Ausgangssignal des Betätigungssensors (3) einer Elektronikeinheit (4) zugeführt wird, welche in Abhängigkeit von diesem Signal einen Bremskraftverstärker (6) als Druckquelle ansteuert, dem ein Hauptbremszylinder (11) nachgeschaltet ist, der mit Radbremsen (16) des Fahrzeugs verbindbar ist, wobei der Bremskraftverstärker (6) in einer Rückfallebene über ein erstes Betätigungsbauteil (47), wie das Bremspedal (1) oder ein an dem Bremspedal (1) angelenktes Bauteil (36;21), und ein im Kraftfluss nachgeschaltetes zweites Betätigungsbauteil (37), wie insbesondere ein Eingangsglied (5) des Bremskraftverstärkers (6), mechanisch ansteuerbar ist, und eine mechanische Entkopplung des ersten Betätigungsbauteils (47) von Kraftrückwirkungen der Kraftfahrzeugbremsanlage durch einen ausreichenden Abstand (a) zwischen dem ersten Betätigungsbauteil (47) und dem im Kraftfluß nachgeschalteten zweiten Betätigungsbauteil (37) vorgesehen ist, wenn in einem by-wire-Modus der Bremskraftverstärker betätigt ist, **dadurch gekennzeichnet, dass** der Simulator (2) an dem Bremspedal (1) vorgesehen ist und ein Mittel (38) vorgesehen ist, um den Abstand (a) nach einem by-wire-Modus zu Beginn einer muskelkraftbetriebenen Bremsbetätigung automatisch zu reduzieren, wobei das Mittel (38) mittels eines elektrischen, elektromagnetischen, hydraulischen oder pneumatischen Aktuators (39) angesteuert ist, welcher in der Rückfallebene automatisch in eine Schließstellung zur Reduktion des Abstandes (a) gelangt.

2. By-Wire-Bremsbetätigungsvorrichtung nach Anspruch 1, **dadurch gekennzeichnet, dass** das Mittel (38) als Kupplung zwischen den beiden Betätigungsbauteilen (47,37) vorgesehen ist.

3. By-Wire-Bremsbetätigungsvorrichtung nach Anspruch 1 oder 2, **dadurch gekennzeichnet, dass** das Mittel (38) einen blockförmigen Körper (40) aufweist, welcher den Abstand (a) zwischen den Betätigungsbauteilen (47,37) formschlüssig überbrückt.

4. By-Wire-Bremsbetätigungsvorrichtung nach Anspruch 3, **dadurch gekennzeichnet, dass** der Aktuator (39) eine Feder (41) zur elastischen Vorspannung des blockförmigen Körpers (40) sowie einen Elektromagneten (42) zum Rückführen oder Rückhalten des blockförmigen Körpers (40) in der Öffnungsstellung aufweist.

5. By-Wire-Bremsbetätigungsvorrichtung nach Anspruch 1, **dadurch gekennzeichnet, dass** der Bremskraftverstärker als Druckquelle einen hydraulischen Verstärker mit mindestens einer hydraulischen Pumpe (53) umfasst, welche im by-wire-Modus durch elektrische Signale ansteuerbar ist, und dass die Betätigung in der Rückfallebene hydraulisch über den Hauptbremszylinder (11) erfolgt.

6. By-Wire-Bremsbetätigungsvorrichtung nach Anspruch 5, **dadurch gekennzeichnet, dass** die Pumpe (53) einen Hochdruckspeicher (54) speist.

7. By-Wire-Bremsbetätigungsvorrichtung nach Anspruch 1, **dadurch gekennzeichnet, dass** der Bremskrafverstärker als Druckquelle einen pneumatischen Verstärker (6) umfasst, welcher im by-wire-Modus durch elektrische Signale und in der Rückfallebene mechanisch durch die Betätigungsbauteile (47,37) ansteuerbar ist.

8. By-Wire-Bremsbetätigungsvorrichtung nach Anspruch 1, **dadurch gekennzeichnet, dass** der Bremskrafverstärker als Druckquelle einen pneumatischen Verstärker (6) und zusätzlich eine hydraulische Pumpe aufweist, welche bei Defekt des pneumatischen Verstärkers (6) oder bei nicht ausreichender Verstärkung angesteuert wird.

9. By-Wire-Bremsbetätigungsvorrichtung nach Anspruch 1, **dadurch gekennzeichnet, dass** der Bremskrafverstärker als Druckquelle einen elektromotorisch angetriebenen Bremskrafverstärker aufweist.

10. By-wire-Bremsbetätigungsvorrichtung nach einem der Ansprüche 7 - 9, **dadurch gekennzeichnet, dass** ein oder mehrere Sensoren, insbesondere ein Wegsensor (17), ein pneumatischer Drucksensor oder Differenzdrucksensor in dem pneumatischen Verstärker (6) und/oder ein hydraulischer Drucksensor (18) in einem Bremskreis vorgesehen ist, welche Abweichungen von Sollwerten detektieren, und dass die Elektronikeinheit (4) auf Grund festgestellter hinreichender Abweichungen eine Fehlfunktion wie beispielsweise Lufteinschluss oder Kreisausfall in der Bremsanlage erkennt und geeignete Sicherheitsprozesse, wie insbesondere die Rückfallebene, auslöst.

11. By-wire-Bremsbetätigungsvorrichtung nach Anspruch 8 und 10, **dadurch gekennzeichnet, dass** der Wegsensor (17) und/oder Drucksensor/Differenzdrucksensor einen Aussteuerpunkt des Verstärkers (6) erkennt und daß über die Elektronikeinheit (4) die hydraulische Pumpe gestartet wird.

12. By-wire-Bremsbetätigungsvorrichtung nach Anspruch 1, **dadurch gekennzeichnet, dass** der Simulator (2) einen Motor (19) oder eine Feder (28) aufweist, welche zur Erzeugung von Rückwirkungskräften dient.

## Claims

1. Brake-by-wire actuation device for actuating a regenerative motor vehicle brake system with a simulator (2) which can be acted on mechanically by means of a brake pedal (1), wherein the simulator (2) has at least one activation sensor (3), and an output signal of the actuation sensor (3) is fed to an electronic unit (4) which activates, as a function of the signal, a brake booster (6) as a pressure source, downstream of which a master brake cylinder (11), which can be connected to wheel brakes (16) of the vehicle, is connected, wherein the brake booster (6) can be driven mechanically in a fallback level by means of a first actuation component (47), such as the brake pedal (1) or a component (36; 21) which is coupled to the brake pedal (1), and a second actuation component (37), such as in particular an input element (5) of the brake booster (6), which is connected downstream in the force flux, can be activated mechanically, and mechanical decoupling of the first actuation component (47) from force reactions of the motor vehicle brake system is provided by a sufficient distance (a) between the first actuation component (47) and the second actuation component (37) which is connected downstream in the force flux, if the brake booster is actuated in a brake-by-wire mode, **characterized in that** the simulator (2) is provided on the brake pedal (1) and a means (38) is provided for automatically reducing the distance (a) after a brake-by-wire mode at the start of a muscle-force-operated brake actuation, wherein the means (38) is activated by means of an electrical, electromagnetic, hydraulic or pneumatic actuator (39) which, in the fallback level, automatically moves into a closed position for reducing the distance (a).

2. Brake-by-wire actuation device according to Claim 1, **characterized in that** the means (38) is provided as a coupling between the two activation components (47, 37).

3. Brake-by-wire actuation device according to Claim 1 or 2, **characterized in that** the means (38) has a block-shaped body (40) which spans the distance (a) between the actuation components (47, 37) in a positively locking fashion.

4. Brake-by-wire actuation device according to Claim 3, **characterized in that** the actuator (39) has a spring (41) for elastically prestressing the block-shaped body (40) and a solenoid (42) for returning the block-shaped body (40) to the open position or retaining said block-shaped body (40) in said opening position.

5. Brake-by-wire actuation device according to Claim 1, **characterized in that** the brake booster comprises, as a pressure source, a hydraulic booster with at least one hydraulic pump (53) which can be activated by means of electrical signals in the brake-by-wire mode, and **in that** the actuation in the fallback level takes place hydraulically by means of the master brake cylinder (11).

6. Brake-by-wire actuation device according to Claim 5, **characterized in that** the pump (53) feeds a high pressure accumulator (54).

7. Brake-by-wire actuation device according to Claim 1, **characterized in that** the brake booster comprises, as a pressure source, a pneumatic booster (6) which, in the brake-by-wire mode can be activated by means of electrical signals, and in the fallback mode can be activated mechanically by means of the actuation components (47, 37).

8. Brake-by-wire actuation device according to Claim 1, **characterized in that** the brake booster has, as a pressure source, a pneumatic booster (6) and in addition a hydraulic pump which is activated in the event of a defect in the pneumatic booster (6) or in the event of inadequate boosting.

9. Brake-by-wire actuation device according to Claim 1, **characterized in that** the brake booster has, as a pressure source, a brake booster which is driven by an electric motor.

10. Brake-by-wire actuation device according to one of Claims 7-9, **characterized in that** one or more sensors, in particular a travel sensor (17), a pneumatic pressure sensor or a differential pressure sensor is/are provided in the pneumatic booster (6) and/or a hydraulic pressure sensor (18) is provided in a brake circuit, which sensors detect deviations from setpoint values, and **in that** the electronic unit (4) detects, on the basis of detected inadequate deviations, malfunctions such as, for example, air occlusion or a circuit failure in the brake system and triggers suitable safety processes such as, in particular, the fallback level.

11. Brake-by-wire actuation device according to Claims 8 and 10, **characterized in that** the travel sensor (17) and/or pressure sensor/differential pressure sensor detects/detect a modulation point of the booster (6), and **in that** the hydraulic pump is started by means of the electronic unit (4).

12. Brake-by-wire actuation device according to Claim 1, **characterized in that** the simulator (2) has a motor (19) or a spring (28) which serves to generate reaction forces.

## Revendications

1. Dispositif d'actionnement de frein à commande électrique pour l'actionnement d'une installation de frein de véhicule automobile régénérative, comprenant un simulateur (2) pouvant être sollicité mécaniquement au moyen d'une pédale de frein (1), le simulateur (2) présentant au moins un capteur d'actionnement (3) et un signal de sortie du capteur d'actionnement (3) étant acheminé à une unité électronique (4), qui commande, en fonction de ce signal, un amplificateur de force de freinage (6) en tant que source de pression, en aval duquel est monté un cylindre de freinage principal (11), qui peut être connecté à des freins de roue (16) du véhicule, l'amplificateur de force de freinage (6) pouvant être commandé mécaniquement dans un niveau de repli par le biais d'un premier composant d'actionnement (47), comme la pédale de frein (1) ou un composant (36 ; 21) articulé à la pédale de frein (1), et un deuxième composant d'actionnement (37) monté en aval dans le flux de forces, comme en particulier un organe d'entrée (5) de l'amplificateur de force de freinage (6), et un désaccouplement mécanique du premier composant d'actionnement (47) des réactions de forces de l'installation de frein de véhicule automobile étant prévu par un espacement suffisant (a) entre le premier composant d'actionnement (47) et le deuxième composant d'actionnement (37) monté en aval dans le flux de forces, lorsque l'amplificateur de force de freinage est actionné dans un mode de commande électrique, **caractérisé en ce que** le simulateur (2) est prévu sur la pédale de frein (1) et un moyen (38) est prévu pour réduire automatiquement l'espacement (a) après un mode de commande électrique au début d'un actionnement de freinage entraîné par la force musculaire, le moyen (38) étant commandé au moyen d'un actionneur électrique, électromagnétique, hydraulique ou pneumatique (39), qui parvient, au niveau de repli, automatiquement dans une position de fermeture pour réduire l'espacement (a).

2. Dispositif d'actionnement de frein à commande électrique selon la revendication 1, **caractérisé en ce que** le moyen (38) est prévu en tant qu'accouplement entre les deux composants d'actionnement (47, 37).

3. Dispositif d'actionnement de frein à commande électrique selon la revendication 1 ou 2, **caractérisé en ce que** le moyen (38) présente un corps (40) en forme de bloc, qui couvre l'espacement (a) entre les composants d'actionnement (47, 37) par engagement par coopération de forme.

4. Dispositif d'actionnement de frein à commande électrique selon la revendication 3, **caractérisé en ce que** l'actionneur (39) présente un ressort (41) pour la précontrainte élastique du corps en forme de bloc (40) ainsi qu'un électroaimant (42) pour le retour ou pour la rétention du corps en forme de bloc (40) dans la position d'ouverture.

5. Dispositif d'actionnement de frein à commande électrique selon la revendication 1, **caractérisé en ce que** l'amplificateur de force de freinage comprend, en tant que source de pression, un amplificateur hydraulique avec au moins une pompe hydraulique (53), qui peut être commandée en mode de commande électrique par des signaux électriques et **en ce que** l'actionnement a lieu au niveau de repli de manière hydraulique par le biais du cylindre de frein principal (11).

6. Dispositif d'actionnement de frein à commande électrique selon la revendication 5, **caractérisé en ce que** la pompe (53) alimente un accumulateur haute pression (54).

7. Dispositif d'actionnement de frein à commande électrique selon la revendication 1, **caractérisé en ce que** l'amplificateur de force de freinage comprend en tant que source de pression, un amplificateur pneumatique (6), qui peut être commandé en mode de commande électrique par des signaux électriques et au niveau de repli de manière mécanique par les composants d'actionnement (47, 37).

8. Dispositif d'actionnement de frein à commande électrique selon la revendication 1, **caractérisé en ce que** l'amplificateur de force de freinage présente en tant que source de pression un amplificateur pneumatique (6) et en outre une pompe hydraulique, qui est commandée en cas de défaillance de l'amplificateur pneumatique (6) ou si l'amplification n'est pas suffisante.

9. Dispositif d'actionnement de frein à commande électrique selon la revendication 1, **caractérisé en ce que** l'amplificateur de force de freinage présente en tant que source de pression un amplificateur de force de freinage entraîné par un moteur électrique.

10. Dispositif d'actionnement de frein à commande électrique selon l'une quelconque des revendications 7 à 9, **caractérisé en ce que** l'on prévoit un ou plusieurs capteurs, notamment un capteur de position (17), un capteur de pression pneumatique ou un capteur de pression différentielle dans l'amplificateur pneumatique (6) et/ou un capteur de pression hydraulique (18) dans un circuit de freinage, lesquels détectent des écarts par rapport à des valeurs de consigne, et **en ce que** l'unité électronique (4) reconnaît, sur la base d'écarts suffisants constatés, un mauvais fonctionnement comme par exemple une inclusion d'air ou une panne de circuit dans l'installation de freinage, et déclenche des processus de sécurité appropriés, comme en particulier le niveau de repli.

11. Dispositif d'actionnement de frein à commande électrique selon les revendications 8 et 10, **caractérisé en ce que** le capteur de position (17) et/ou le capteur de pression ou le capteur de pression différentielle reconnaissent un point de réglage de l'amplificateur (6) et **en ce que** la pompe hydraulique est démarrée par le biais de l'unité électronique (4).

12. Dispositif d'actionnement de frein à commande électrique selon la revendication 1, **caractérisé en ce que** le simulateur (2) présente un moteur (19) ou un ressort (28), qui sert à produire des forces de réaction.
